# EUROPÄISCHE PATENTANMELDUNG

(11) **EP 3 975 386 A1**
(43) Veröffentlichungstag der Anmeldung: **30.03.2022**
(21) Anmeldenummer: 20198261.8
(22) Anmeldetag: 25.09.2020
(51) Int. Cl.: H02K 1/14, H02K 3/46, H02K 7/18, H02K 3/48, H02K 3/487, H02K 1/20, H02K 15/06

(54) **SPULENFIXIERUNG AN HALBOFFENEN NUTEN EINES STATORSEGMENTS**

(71) Anmelder: Siemens Aktiengesellschaft, 80333 München (DE)
(72) Erfinder: Bodensiek, Kevin, 90552 Röthenbach an der Pegnitz (DE); Deutsch, Artur, 94086 Bad Griesbach i. Rottal (DE); Schäfer, Klaus, 90455 Nürnberg (DE); Schönbauer, Norbert, 94072 Bad Füssing (DE); Weger, Michael, 94149 Kößlarn (DE)
(74) Vertreter: Michalski Hüttermann & Partner Patentanwälte mbB

(57) **Zusammenfassung**

Die Erfindung betrifft ein Statorsegment (3) eines Stators (2) einer dynamoelektrischen Maschine (1) mit
- axial hintereinander angeordneten genuteten Blechen, so dass im Wesentlichen axial verlaufende Nuten (7) gebildet sind,
- Abstandshaltern (6), die nach einer vorgebbaren Anzahl von Blechen in axialer Richtung vorgesehen sind, so dass in axialer Richtung betrachtet zwei oder mehrere Teilblechpakete (4) des Statorsegments (3) vorhanden sind, die durch Spalte (5) getrennt sind,
- in den Nuten (7) angeordneten Spulen (12), wobei in einer Nut (7) eine Spulenseite (24) oder zwei Spulenseiten (24) unterschiedlicher Spulen (12) angeordnet sind,
- zumindest einer offenen Nut (8) an den nutparallelen äußeren Begrenzungsseiten der Bleche,
- Befestigungsmitteln, die die Spulenseiten (24) in den offenen Nuten (13) an dem Statorsegment (3) fixieren, wobei Fixierhilfselemente (14) im Bereich der Spalte (5) zwischen den Teilblechpaketen (4) angeordnet sind und über die eine Fixierung der Spulenseiten (24) in den offenen Nuten (8) am Blechpaket mittels Bandagen (19) erfolgt.

## Beschreibung

Die Erfindung betrifft ein Statorsegment, einen Stator einer dynamoelektrischen Maschine, insbesondere einen Generator, einer Windkraftanlage.

Bei segmentierten elektrischen Maschinen, insbesondere Motoren oder Generatoren im höheren Leistungsbereich über 1 MW besteht die Möglichkeit das Eisenpaket des Stators so aufzuteilen, dass an den nutparallelen Begrenzungsseiten halbe Nuten vorhanden sind. Erst durch die Montage der einzelnen Segmente in Umfangsrichtung und dadurch der Komplettierung des Stators in Umfangsrichtung wird eine vollständige Nut mit einer Wicklung geschaffen. Dies wird beispielsweise bei großen Zahnspulen- oder Formspulenwicklungen umgesetzt.

Aus der DE 10 2005 029 895 A1 ist ein Direktantrieb für Großantriebe bekannt, der aus mehreren Segmenten aufgebaut ist, die pro Segment eine abgeschlossene Wicklungsanordnung aufweisen.

Aus der EP 0 718 955 A2 ist ein Stator einer hochpoligen mehrphasigen elektrischen Maschine bekannt, wobei der Stator mehrere Segmente unterteilt ist und sich auf jedem Segment eine mehrphasige Wicklung befindet.

Problematisch ist die Fixierung der außenliegenden Spulenschenkeln bzw. Spulenseiten an den umfänglich äußeren Rändern der Statorsegmente in den halben bzw. offenen Nuten. Die Fixierung der außenliegenden Spulenseiten ist insbesondere während des Fertigungsprozesses und Montageprozesses wichtig, um u.a. während und nach der Imprägnierung die Spulenseite an ihrer Position am Statorsegment in der offenen Nut zu fixieren.

Ausgehend davon liegt der Erfindung die Aufgabe zugrunde, bei dementsprechend gestalteten Statorsegmenten Zahnspulen oder Formspulen vorzusehen, die positionsgenau während des Fertigungs- und Montageprozesses fixierbar sind, um so insbesondere einen effizienten Stator eines Generators einer Windkraftanlage bereitstellen zu können.

Die Lösung der gestellten Aufgabe gelingt durch ein Statorsegment eines Stators einer dynamoelektrischen Maschine mit
- axial hintereinander angeordneten genuteten Blechen, so dass im Wesentlichen axial verlaufende Nuten gebildet sind,
- Abstandshaltern, die nach einer vorgebbaren Anzahl von Blechen in axialer Richtung vorgesehen sind, so dass in axialer Richtung betrachtet zwei oder mehrere Teilblechpakete des Statorsegments vorhanden sind, die durch Spalte getrennt sind,
- in den Nuten angeordneten Spulen, wobei in einer Nut eine Spulenseite oder zwei Spulenseiten unterschiedlicher Spulen angeordnet sind,
- zumindest einer offenen Nut an den nutparallelen äußeren Begrenzungsseiten der Bleche,
- Befestigungsmitteln, die die Spulenseiten in den offenen Nuten an dem Statorsegment fixieren, wobei Fixierhilfselemente im Bereich der Spalte zwischen den Teilblechpaketen angeordnet sind und über die eine Fixierung der Spulenseiten in den offenen Nuten am Blechpaket mittels Bandagen erfolgt.

Die Lösung der gestellten Aufgabe gelingt auch durch einen Stator mit erfindungsgemäßen Statorsegmenten, wobei sich die einander zugewandten offenen Nuten verschiedener Statorsegmente über mechanische Befestigungsmittel aneinander und/oder über eine Tragstruktur befestigt, den Stator bilden.

Die Lösung der gestellten Aufgabe gelingt auch durch eine dynamoelektrische Maschine, insbesondere einen Generator einer Windkraftanlage, mit einem erfindungsgemäßen Stator, wobei ein Kühlsystem, insbesondere ein Lüfter vorgesehen ist, durch das in die vorhandenen Spalte zwischen den Teilblechpaketen ein Kühlmittel, insbesondere Kühlluft förderbar ist.

Die Lösung der gestellten Aufgabe gelingt auch durch eine Windkraftanlage, insbesondere mit einem erfindungsgemäßen direkt angetriebenen Generator, wobei der Generator, insbesondere als Außenläufer ausgebildet ist.

Zwischen Teilblechpaketen eines Blechpakets eines Statorsegments sind Abstandshalter vorgesehen, die zum einen die Teilblechpakete voneinander beabstanden, radiale Kühlkanäle innerhalb des Blechpakets des Statorsegments und damit des Stators bilden, als auch als Haltevorrichtung für die insbesondere amagnetischen Befestigungsmittel zur Fixierung der Spulenschenkel bzw. Spulenseiten an der Nutseitenwand der offenen Nut dienen.

Die Abstandshalter sind in ihrer radialen Ausdehnung maximal so hoch wie der Jochrücken und die radiale Zahnhöhe zusammen. Im Normalfall werden die Abstandshalter in den Bereich des Jochrückens ragen und auch nicht die maximale Zahnhöhe einnehmen.

Eine Spulenseite einer Spule am jeweiligen umfänglichen Ende eines Statorsegments wird in einer offenen Nut erfindungsgemäß durch Fixierhilfselemente und mithilfe einer zusätzlichen Bandage fixiert. Das Fixierhilfselement wird auf der Oberseite des Spulenschenkels positioniert, vorzugsweise mit einem Positioniernocken, der in den Spalt zwischen zwei Teilblechpaketen ragt. Die Bandage, die an einem Abstandshalter des Spaltes fixiert ist, wird über das Fixierhilfselement an der Oberseite der Spulenseite diagonal zum nächsten Fixierhilfselement gezogen und an dem dortigen Spalt über den dort vorhandenen Abstandshalter, vorzugsweise unter Spannung fixiert.

Durch abgerundete Kanten an dem Fixierhilfselement wird eine Verletzung der Bandage an scharfen Kanten vermieden. Erfindungsgemäß bleibt durch die Fixierung der Spulenseite in der offenen Nut auch ein Abstand zur Spulenseite einer Spule des nächsten Statorsegments, nach Montage der Statorsegmente zu einem Stator, so dass Kühlmöglichkeiten, insbesondere eine Luftkühlung auch in axialer Richtung ermöglicht wird.

Das Fixierhilfselement weist ein in den Grundfunktionen einheitliches Design auf und kann mittels verschiedener Fertigungsverfahren (z.B. Formpressen) kostengünstig gefertigt werden.

Erfindungsgemäß erfolgt die Fixierung des außenliegenden Spulenschenkels am Ende des Statorsegments durch nicht-magnetische Befestigungsmittel, wie amagnetische Kabelbinder.

Durch diese nicht-magnetische Befestigungsmittel werden Aufheizungen durch Wirbelströme im Betrieb der dynamoelektrischen Maschine, also z.B. des Windkraftgenerators vermieden. Des Weiteren wird durch die Fixierung der außenliegenden Spulenschenkel, insbesondere während des Fertigungsprozesses, hier vor allem des Imprägnierungsprozesses, aber auch während des Montageprozesses gewährleistet, dass sich der Spulenschenkel nicht von dem, eine offene Nut bildenden Zahn entfernt und somit die Montage oder weitere Fertigungsschritte beeinträchtigt.

Außerdem wird dadurch auch eine Beschädigung der Isolation an der umfänglich äußeren Spulenseite vermieden, die sich bei der Montage der Statorsegmente zu einem Stator ergeben kann.

In einer Ausführung werden die amagnetischen Befestigungsmittel, sowohl das Fixierhilfselement als auch die Bandage beispielsweise aus Kunststoff oder anderen nicht magnetischen Werkstoffen, wie Aluminium. insbesondere durch nicht-magnetische Kabelbinder, Schnüre oder Bänder realisiert, was eine im Fertigungsprozess schnelle und unproblematische Fixierung durch kostengünstige Standardteile gewährleistet.

Außerdem ist es vorteilhaft, dass diese nicht-magnetischen Befestigungsmittel, insbesondere das Fixierhilfselement und Kabelbinder eine dauerhaft starke Fixierung der Spulenschenkel an den außenliegenden Zähnen gewährleisten, was insbesondere auch für längere Lagerzeiten derartiger Statorsegmente von Vorteil ist.

Die Erfindung sowie weitere vorteilhafte Ausgestaltungen der Erfindung werden anhand prinzipiell dargestellter Ausführungsbeispiele näher erläutert. Darin zeigt:
- FIG 1: ein Statorsegment,
- FIG 2: ein Statorsegment auf einer Tragstruktur,
- FIG 3: einen Teilausschnitt eines Statorsegments mit Zahnspule,
- FIG 4: eine perspektivische Darstellung eines Teilsegments,
- FIG 5: einen Teilausschnitt eines Statorsegments mit Zahnspule,
- FIG 6: eine perspektivische Darstellung eines Teilsegments,
- FIG 7 bis 10: Fixierhilfselemente,
- FIG 11: eine perspektivische Darstellung einer Fixierung,
- FIG 12: eine Fixierung im Querschnitt
- FIG 13: eine Windkraftanlage.

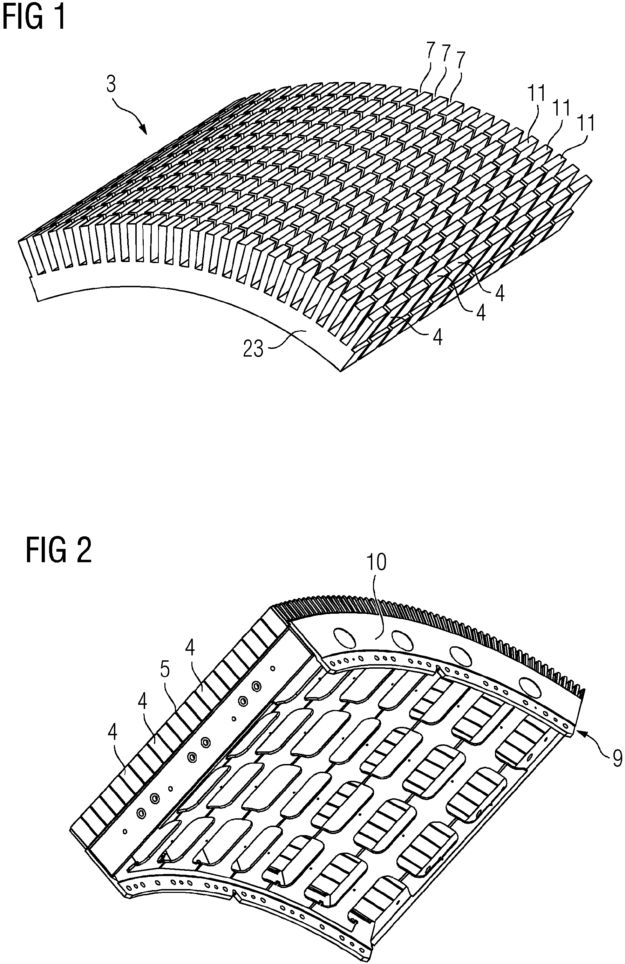

FIG 1 zeigt ein Blechpaket eines Statorsegments 3 einer dynamoelektrischen Maschine 1, insbesondere eines Generators mit einem Außenläufer, was darin ersichtlich ist, dass die Nuten 7 dieses Statorsegments 3 stachelförmig radial nach außen stehen und das Statorsegment 3 konvex ausgebildet ist.

Das Statorsegment 3 ist in diesem Fall in axialer Richtung aus einzelnen Teilblechpaketen 4 aufgebaut, die durch Abstandshalter 6 voneinander beabstandet sind. Jedes Teilblechpaket 4 weist eine vorgegebene Anzahl von Blechen auf. Diese Paketierung des Statorsegments 3 ermöglicht im Einsatzfall des Statorsegments 3 bzw. im Betrieb eines zusammengesetzten Stators 2 in einer Windkraftanlage 26 als Teil eines Generators u.a. eine radiale Kühlung des Stators 2.

In Nuten 7 des Statorsegments 3 sind Formspulen, insbesondere Spulen 12 eingesetzt, die jeweils einen Zahn 11, als Zahnspule oder mehrere Zähne umfassen. In jedem Fall müssen Spulenseiten 24 in den offenen Nuten 8, wie später noch beschrieben und gezeigt, fixiert werden. Die Zähne 11 sind pro Blech durch einen Jochrücken 23, insbesondere einstückig verbunden.

FIG 2 zeigt in perspektivischer Darstellung das Blechpaket aus FIG 1, das auf einer Tragstruktur 9 angeordnet ist. Das Blechpaket mit seinen Teilblechpaketen 4 wird dabei mittels Druckplatten 10 axial fixiert.

Öffnungen in der Tragstruktur 9 ermöglichen Kühlluftströmungen.

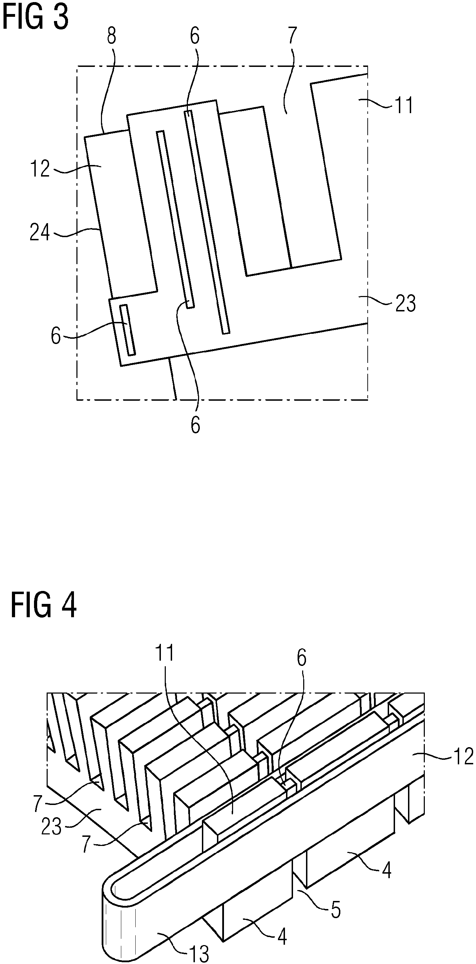

FIG 3 zeigt in einem Teilquerschnitt eines Randbezirks eines Statorsegments 3, einen Zahn 11, der von einer Zahnspule umgeben ist. Abstandshalter 6 an dem Zahn 11 und dem Jochrücken 23 generieren zu einem benachbarten Teilblechpaket 4 einen Spalt 5. Die Abstandshalter 6 sind in dieser Darstellung in ihrer Breite wesentlich geringer ausgeführt als die Breite eines Zahnes 11. Diese Spalte 5 bilden, in radialer Richtung betrachtet, Kühlkanäle des Statorsegments 3 mit vergleichsweise großem Querschnitt. Der Abstandshalter 6 erstreckt sich in radialer Richtung bis zum Jochrücken 23 oder aus mechanischen Gründen bis in den Jochrücken 23 des Statorsegments 3.

Die Abstandshalter 6 sind in ihrer radialen Ausdehnung maximal so hoch wie der Jochrücken 23 und die radiale Zahnhöhe zusammen. Im Normalfall werden die Abstandshalter 6 in den Bereich des Jochrückens 23 ragen und auch nicht die maximale Zahnhöhe einnehmen, wie dies beispielhaft an dem Zahn 11 gezeigt ist.

Eine Spulenseite 24 ist in der offenen Nut 8 angeordnet und muss dort fixiert werden.

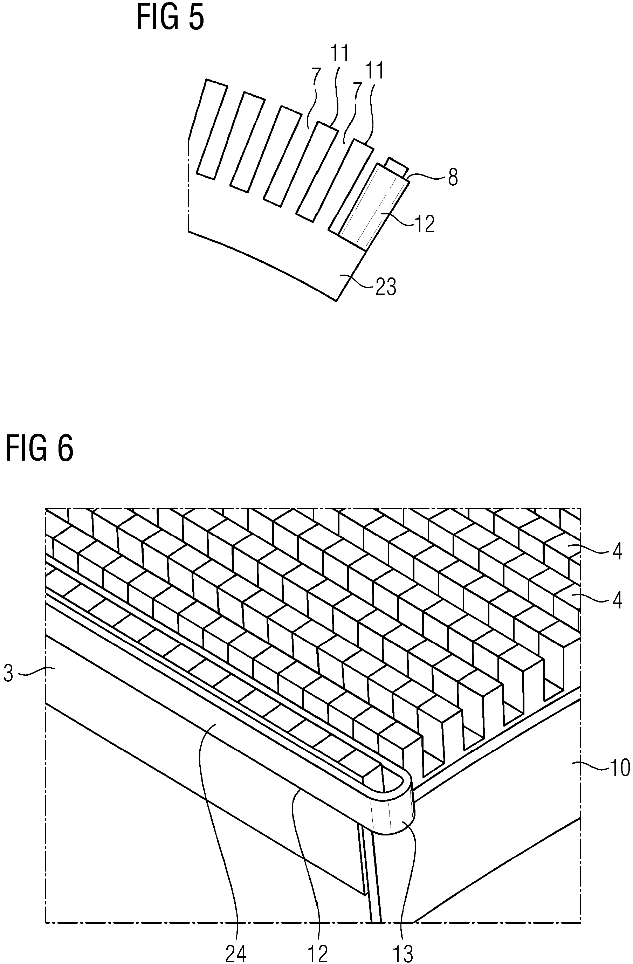

FIG 4, 5 und 6 zeigt einen Randbezirk eines Statorsegments 3 in perspektivischer Darstellung oder im Querschnitt. Das Blechpaket des Statorsegments 3 weist radial nach außen weisende Zähnen 11 auf. Dazwischen verlaufen im Wesentlichen axial die Nuten 7. Das Blechpaket ist axial aus Teilblechpaketen 4 zusammengesetzt und weist eine beispielhafte Zahnspule auf, die an der Stirnseite des Blechpakets einen Wickelkopf 13 ausbildet. Zwischen den Teilblechpaketen 4 sind die Abstandshalter 6 vorgesehen, die insbesondere mit dem jeweils letzten bzw. ersten Blech des Teilblechpaketes 4 verschweißt sind.

An dem umfänglichen äußeren Rand des Statorsegments 1 befindet sich somit nur ein Teil einer Nut 7, die als offene Nut 8 bezeichnet wird, in die ein Spulenseite 24 einer Zahnspule 12 oder einer anderen Formspule positioniert ist.

Eine Nut 7 setzt sich aus Nutseitenwänden und einem Nutgrund zusammen. Als offene Nut 8 wird demnach eine Nut bezeichnet, die nur eine Nutseitenwand und zumindest einen Teil des Nutgrundes aufweist.

Die Nuten 7, 8 sind dabei im Wesentlichen parallel zu einer Achse 22 eines Stators 2 ausgerichtet.

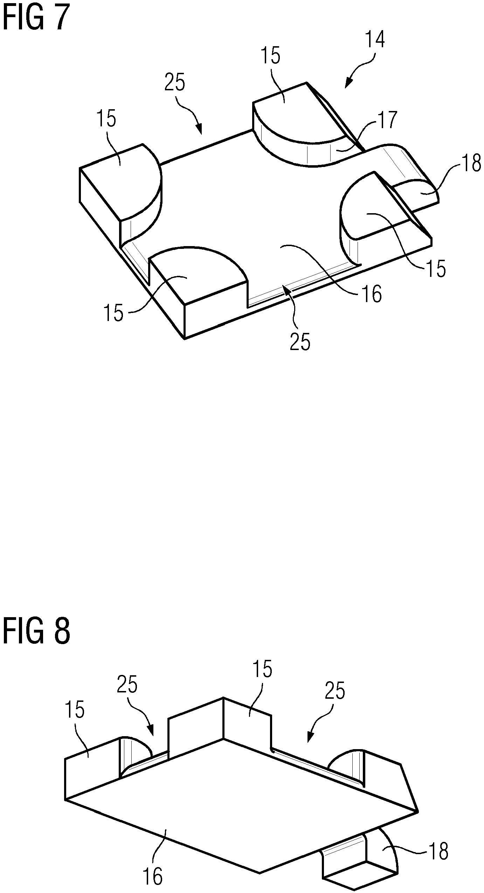

Um nunmehr eine Positioniergenauigkeit und Fixierung dieser Spulenseite 24 einer Formspule oder Zahnspule 12 an der Nutseitenwand einer offenen Nut 8 zu erhalten, werden Fixierhilfselemente 14, wie beispielhaft in FIG 7 bis 10 wie in FIG 3 vorgesehen. Die Fixierhilfselemente 14 weisen folgenden grundsätzlichen Aufbau auf. An einer Platte 16 befinden sich vorzugsweise in den Ecken der Oberseite der Platte 16 Spannnocken 15. In einem Bereich der Platte 16 ist ein Positionsnocken 18 vorgesehen.

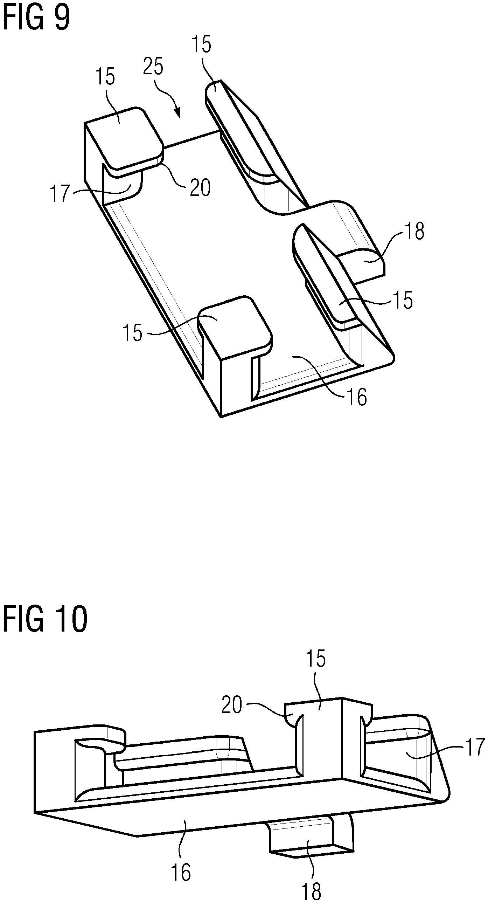

Dieser Positionsnocken 18 weist in die entgegengesetzte Richtung wie die Spannnocken 15. Abgerundete Kanten 17, und Führungen 20, insbesondere wie in FIG 9 und FIG 10 dargestellt, vermeiden Verletzungen einer Bandage 19, die zur Fixierung der Spulenseiten 24 in der offenen Nut 8 vorgesehen ist.

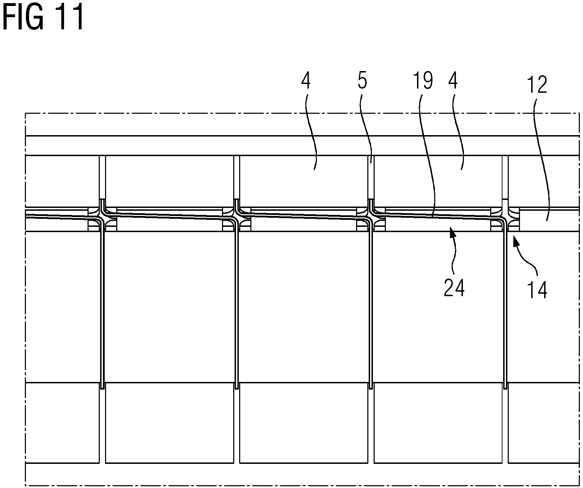

FIG 11 zeigt die prinzipielle Fixierung der Spulenseite 24 in einer offenen Nut 8. Eine Spulenseite 24 einer Spule 12 wird an einem umfänglichen Ende eines Statorsegments 3 in einer offenen Nut 8 durch Fixierhilfselemente 14 und der Bandage 19 fixiert. Das Fixierhilfselement 14 wird auf der Oberseite der Spulenseite 24 positioniert, vorzugsweise mit dem Positionsnocken 18, der in den Spalt 5 zwischen zwei Teilblechpaketen 4 ragt. Die Bandage 19, die an einem Abstandshalter 6 dieses Spaltes 5 fixiert ist, wird nun über das Fixierhilfselement 14 an der Oberseite der Spulenseite 24 diagonal zum nächsten Fixierhilfselement 14 gezogen und an dem dortigen Spalt 5 über den dort vorhandenen Abstandshalter 6, vorzugsweise unter Spannung fixiert. Die Bandage 19 wird dabei über die Kanäle des Fixierelements 14 gespannt, die zwischen den Spannnocken 15 vorhanden sind.

Die Bandage 19 wird also diagonal vorzugsweise über eine oder mehrere axiale Teilblechpaketlängen an der Oberseite der Spulenseite 24 gezogen. FIG 11 zeigt die Spannung nur über eine axiale Teilblechpaketlänge.

Als Bandage 19 kann ein amagnetischer Kabelbinder vorgesehen werden.

Damit wird die außenliegende Spulenseite 24, also der Spulenschenkel in der offenen Nut 8 mittels der Bandage 19, insbesondere des amagnetischen Kabelbinders fixiert. Die Bandage 19 ist dabei an einem Abstandshaltern 6 des jeweiligen Spaltes 5 fixiert und spannt sich somit über zwei Fixierhilfselemente 14. Damit erleichtert sich auch im Fertigungsprozess die Imprägnierung, da ein "sich bewegbarer außenliegenden Spulenschenkels 10" vermieden wird.

Anstatt und/oder ergänzend zu der beschriebenen diagonalen Fixierung, kann die Spulenseite 24 in der offenen Nut 8 auch mittels des Fixierhilfselements 14 an Abstandshaltern 6 eines Spaltes 5 fixiert oder zusätzlich fixiert werden.

Die Bandage 19 zieht somit die Spulenseite 24 an die Nutseitenwand der offenen Nut 8.

Auf die axiale Länge eines Statorsegments 3 betrachtet, befinden sich beispielsweise nur an einem oder mehreren Spalten 5 Fixierhilfselemente 14. Dementsprechend sind dann auch weniger Fixierungen an einer Spulenseite 24 vorgesehen.

Aufgrund der speziellen erfinderischen Fixierung diagonal über einen vorgebbaren Abschnitt der Spulenseite 24,(eine oder mehrere axiale Längen von Teilblechpaketen), kann auf diese Art und Weise der Abschnitt der Spulenseite 24 auf Höhe des ersten und letzten Teilblechpakets nicht so fixiert werden. Dies ist jedoch von untergeordneter Bedeutung, da in diesen Abschnitten die Spulenseite 24 wenig Bestrebungen hat sich von der Nutseitenwand der offenen Nut weg zu bewegen. Ansonsten ist es möglich die Fixierung der Spulenseite 24 auch nur an einem Spalt 5 an einem bereits bestehenden Fixierhilfselement 14 oder an einem zusätzlichen Fixierhilfselement 14 an diesem Spalt 5 vorzunehmen.

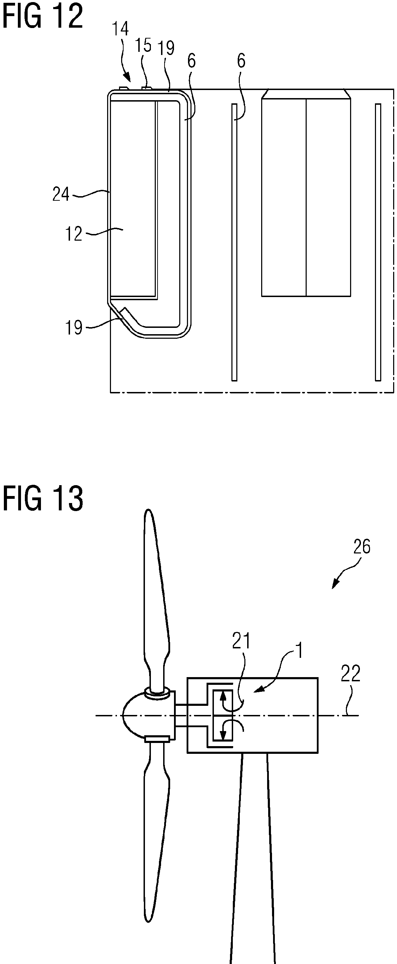

FIG 12 zeigt einen Querschnitt eines Randbezirks des Statorsegments 3 mit fixierter Spulenseite 24. Die Anordnung der Spule 12 auf dem letzten, also äußeren Zahn 11, zeigt die Fixierung der äußeren Spulenseite 24. Man sieht, dass die Fixierhilfselemente 14 sich kaum aus der Shilouette des Blechpakets abheben, so dass ein Luftspalt der dynamoelektrischen Maschine 1 davon nicht beeinträchtigt wird. Das Wicklungssystem dieses Statorsegments 1 ist so aufgebaut, dass um jeden Zahn 3 eine Zahnspule 11 vorgesehen ist. Das bedeutet, dass in jeder Nut 7 unterschiedliche Spulenseiten unterschiedlicher Spulen 12 vorhanden sind.

Jeder in einer offenen Nut 8 befindliche Spulenschenkel eines Statorsegments 3 wird durch einen oder mehrere axial verteilt angeordnete Fixierhilfselemente 14 und deren Bandagen 19 am äußeren Zahn bzw. an der Nutseitenwand der offenen Nut 8 mit Fixationspunkten der Bandagen 19 an den Abstandshaltern 6 bzw. im Bereich der Abstandshalter 5 fixiert.

Eine derartige Anordnung von Statorsegmenten 3 wird bei Statoren 2 bevorzugt, die für große Leistungen und/oder Direktantriebe, insbesondere bei Windkraftanlagen 26 gemäß FIG 13 oder Rohrmühlen vorgesehen sind. Ein Rotor ist mit Permanentmagneten und/oder mit eigenem Wicklungssystem versehen. Er dreht dabei sich um eine Achse 22, wobei die Nuten 7 des Statorsegments 3 und damit des Stators 2 im Wesentlichen achsparallel ausgerichtet sind.

FIG 13 zeigt dabei eine Windkraftanlage 26 mit einem direkt angetriebenen Generator - also ohne Getriebe - der als Außenläufer ausgebildet ist.

Dabei kann ein Lüfter einen Kühlstrom 21 erzeugen, der zumindest den Generator und/oder Umrichterkomponenten, insbesondere den Stator 2 über die durch die Abstandshalter 6 generierten radialen Kühlkanäle bzw. Spalte 5 im Statorsegment 3 kühlt.

## Patentansprüche

1. Statorsegment (3) eines Stators (2) einer dynamoelektrischen Maschine (1) mit
- axial hintereinander angeordneten genuteten Blechen, so dass im Wesentlichen axial verlaufende Nuten (7) gebildet sind,
- Abstandshaltern (6), die nach einer vorgebbaren Anzahl von Blechen in axialer Richtung vorgesehen sind, so dass in axialer Richtung betrachtet zwei oder mehrere Teilblechpakete (4) des Statorsegments (3) vorhanden sind, die durch Spalte (5) getrennt sind,
- in den Nuten (7) angeordneten Spulen (12), wobei in einer Nut (7) eine Spulenseite (24) oder zwei Spulenseiten (24) unterschiedlicher Spulen (12) angeordnet sind,
- zumindest einer offenen Nut (8) an den nutparallelen äußeren Begrenzungsseiten der Bleche,
- Befestigungsmitteln, die die Spulenseiten (24) in den offenen Nuten (13) an dem Statorsegment (3) fixieren, wobei Fixierhilfselemente (14) im Bereich der Spalte (5) zwischen den Teilblechpaketen (4) angeordnet sind und über die eine Fixierung der Spulenseiten (24) in den offenen Nuten (8) am Blechpaket mittels Bandagen (19) erfolgt.

2. Statorsegment (3) nach Anspruch 1, **dadurch ge- kennzeichnet**, dass das Fixierhilfselement (14) als ein einstückiges Element ausgebildet ist, das eine Platte (16) mit mehreren Nocken (15,18) aufweist, wobei zumindest eine Anzahl der Nocken (15) an den Eckpunkten der Platte (16) vorgesehen ist.

3. Statorsegment (3) nach Anspruch 2, **dadurch ge- kennzeichnet**, dass die Nocken (15,18) des Fixierhilfselements überwiegend abgerundete Kanten (17) aufweisen.

4. Statorsegment (3) nach Anspruch 2 oder 3, **dadurch gekennzeichnet, dass** zumindest ein Nocken als Positionsnocken (18) vorgesehen ist, der die Positionierung des Fixierhilfselements (14) zwischen den Teilblechpaketen (4) erleichtert.

5. Statorsegment (3) nach einem der vorhergehenden Ansprüche, **dadurch gekennzeichnet, dass** als Bandage (19) ein amagnetischen Befestigungsmittel, insbesondere ein amagnetischer Kabelbinder vorgesehen ist.

6. Statorsegment (3) nach einem der vorhergehenden Ansprüche, **dadurch gekennzeichnet, dass** die Bandage (19) die Spulenseite (24) in der offenen Nut (8) derart fixiert, dass die Bandage (19) an einem Abstandshalter (6) zwischen den Teilblechpaketen (4) fixiert ist und über das Fixierhilfselement (14) dieses Spaltes (5) zum Fixierhilfselement (14) eines nächsten Spaltes (5) geführt ist und am dortigen Abstandhalter (6) vorzugsweise unter Spannung fixiert ist.

7. Stator (2) mit Statorsegmenten (3) nach einem der vorhergehenden Ansprüche, **dadurch gekennzeich**- **net**, dass die sich einander zugewandten offenen Nuten (8) zweier Statorsegmente (1) nur mit einer Spulenseite (24) eines Statorsegments (1) oder zwei Spulenseite (24) unterschiedlicher aber benachbarter Statorsegmente (1) versehen sind.

8. Dynamoelektrische Maschine (1), insbesondere Generator einer Windkraftanlage, mit einem Stator (2) nach Anspruch 7, **dadurch gekennzeichnet, dass** ein Kühlsystem, insbesondere Lüfter vorgesehen ist, der über die vorhandenen Spalte (5) zwischen den Teilblechpaketen (4) Kühlluft fördert.

9. Windkraftanlage (26), insbesondere mit einem direkt angetriebenen Generator nach Anspruch 8, wobei der Generator, insbesondere als Außenläufer ausgebildet ist.
